# EUROPÄISCHE PATENTSCHRIFT

(11) **EP 0 884 235 B1**
(45) Veröffentlichungstag und Bekanntmachung des Hinweises auf die Patenterteilung: **17.07.2002**
(21) Anmeldenummer: 98109505.2
(22) Anmeldetag: 26.05.1998
(51) Int. Cl.: B62D 25/24, B05C 21/00, B05D 1/32

(54) **Befestigungsanordnung für einen Durchführungsstopfen an einem beschichteten Blechteil und Maskierungsstopfen**
Arrangement for mounting a cable lead-through plug in a coated metal sheet, and masking member
Agencement de montage d'un bouchon à passage de câble à travers une tôle avec un revêtement protecteur, et élément de masquage

(30) Priorität: 11.06.1997 DE 19724611
(43) Veröffentlichungstag der Anmeldung: 16.12.1998
(73) Patentinhaber: Volkswagen Aktiengesellschaft, 38436 Wolfsburg (DE)
(72) Erfinder: Ehlers, Ingo, 38165 Wendhausen (DE); Schönfeld, Andreas, 38446 Wolfsburg (DE)

(56) Entgegenhaltungen:
- EP-A- 0 257 872
- US-A- 3 851 794
- US-A- 4 784 285

## Beschreibung

Die Erfindung betrifft die Befestigungsanordnung eines Durchführungsstopfens in der Ausnehmung eines mit einer Kunststoffschicht zum Korrosionsschutz , zur Schallisolierung und Vibrationsdämpfung beschichteten Blechbauteiles eines Kraftfahrzeuges, insbesondere für eine Leitungsdurchführung in einem Radkasten, ein Verfahren zur Herstellung der Befestigungsanordnung und einen Maskierungsstopfen.

Es ist bekannt, Blechbauteile an einem Kraftfahrzeug mit Leitungsdurchführungen zu versehen. Dazu werden Gummi- oder Kunststoffstopfen verwendet, die dichtend in entsprechenden Ausnehmungen am Blechbauteil angeordnet werden. Problematisch ist eine dichtende Anordnung an einem Blechbauteil dann, wenn dieses zum Zwecke der Schallisolierung und Vibrationsdämpfung und zum Korrosionsschutz mit einer entsprechend dicken Kunststoffschicht, beispielsweise PVC, beschichtet ist. Die bei einer derartigen Beschichtung gegebenen rauhe Oberfläche steht einer dichtenden Anordnung eines Stopfens, der mit Dichtlippen an dem die Ausnehmung umgebenden beschichteten Blechrand anliegt, entgegen, so daß Feuchtigkeit und Spritzwasser unter die Dichtlippen und zwischen den Stopfen und den Blechrand eindringen und am Rand der Ausnehmung Korrosion verursachen können. Deshalb ist es auch bekannt, den die Ausnehmung umgebenden Blechrand beschichtungsfrei zu halten und den Durchführungsstopfen direkt auf dem grundierten Blech anzuordnen. Dazu werden vor der Beschichtung des Blechbauteils ein Maskierungselement, beispielsweise ein Maskierungsstopfen, angeordnet, das den Blechrand abdeckt, anschließend die Beschichtung vorgenommen, das Maskierungselement entfernt und der Durchführungsstopfen am beschichtungsfreien Blechrand angeordnet.

Dafür geeignete Maskierungs- und Abdeckelemente und Maskierungsstopfen sowie Verfahren zum Maskieren von Gegenständen für Oberflächenbehandlungen, bei dem eine bestimmte, von einem Überzug bzw. einer Beschichtung oder Plattierung freizuhaltende Teilfläche eines Gegenstandes oder eine Ausnehmung in diesem mit einem derartigen Element maskiert wird, sind aus dem Stand der Technik bekannt. In der USP 2 388 835 werden dazu Maskierungselemente aus Gummi beschrieben, die wie Stöpsel in die abzudeckenden Ausnehmungen eingeführt werden. Die EP 0 249 444 B1 beschreibt ein Verfahren zur Behandlung des Unterbodens einer Fahrzeugkarosserie mit einer viskoelastischen Schicht, so daß dieser korrosionsbeständig, schallisolierend und vibrationsdämpfend wird, mit einer viskoelastischen Schicht, bei dem nicht zu beschichtende Teile des Unterbodens mit Abdeckelementen aus Kunststoffschaum versehen werden, die nach dem Beschichten entfernt werden. Für Bohrungen in dem Karosserieboden werden dazu Stopfen verwendet.

Aus der EP 0 256 782 B1 ist eine Maske zum Schutz der Innenseite und des Umfangs einer in einem Gegenstand befindlichen Bohrung, der oberflächenbehandelt wird, bekannt, die aus einem in der Bohrung anordbaren Einsatzteil zur Fixierung der Maske und einem an diesem angeordneten Flansch zur Anlage am Gegenstand im die Bohrung umgebenden Randbereich gebildet ist, um diesen Bereich während der Oberflächenbehandlung zu schützen. Dabei ist der Einsatzteil derart geformt, daß er beim Einsatz in die Bohrung elastisch verformt wird und die Maske am Gegenstand positioniert festhält.

Die EP 0 262 946 B1 hat eine Maske zum Abdecken eines Teilbereiches einer Oberfläche in Form eines Abdeckelementes in Gefäßform mit einem Flansch zum Aufsetzen auf die Oberfläche zum Gegenstand, beispielsweise an einer Bohrung. Der Flansch kann mit einer Haftschicht zur Fixierung der Maske an der Oberfläche und an seinem äußeren Rand mit einer senkrecht zu diesem und damit senkrecht zur Oberfläche angeordneten Wand versehen sein.

In der EP 0 263 637 B1 wird ein Abdeckelement zum Schutze des Innern eines Loches bei einer Oberflächenbehandlung der Oberfläche eines Gegenstandes beschrieben, das einen Einführteil in Gefäßform für das Loch und einen Flansch zur Anlage an der Oberfläche mit einer senkrecht an dessen Rand ausgebildeten Wand aufweist. Das Abdeckelement wird nach der Oberflächenbehandlung entfernt.

Schließlich wird in der EP 0 303 268 B1 ein Verfahren beschrieben, bei dem unter Einsatz der vorstehend beschriebenen Masken und Abdeckelemente eine Oberflächenbehandlung eines Metallgegenstandes vorgenommen und die Masken und Abdeckelemente danach entfernt werden, wobei die Oberflächenbehandlung im Auftragen eines viskoelastischen Materials auf den Metallgegenstand, beispielsweise die Unterseite einer Kraftfahrzeugkarosserie besteht.

Zwischen dem eingangs erwähnten, auf dem beschichtungsfreien Blechrand angeordneten Durchführungsstopfen und der Beschichtung ist, auch wenn diese aneinandergrenzen, eine kritische Zone gegeben. Ist das Blechbauteil ein Radkasten, der durch Spritzwasser und Sand- und Steinschlag stark beansprucht ist, kann es im Bereich des Überganges vom Durchführungsstopfen zur Beschichtung zu Verletzungen der Grundierung und zum Entstehen von Korrosionsherden kommen.

Mit den vorstehend beschriebenen Maskierungs- und Abdeckelementen kann jedoch die Korrosionsgefahr im Anordnungsbereich eines austauschbaren Verschlußstopfens nicht beseitigt werden. Diese Abdeck- und Maskierungselemente werden nach der Beschichtung entweder in Gänze in der Ausnehmung belassen und erlauben deren Austausch ohne Zerstören des Beschichtungsrandes nicht, oder sie werden nach der Beschichtung wieder entfernt, um ein anderes Element anzuordnen, beispielsweise einen Durchführungsstopfen, wobei wieder die kritische Zone gegeben ist.

Es ist deshalb Aufgabe der Erfindung, eine Befestigungsanordnung für einen Durchführungsstopfen nach dem Oberbegriff des Anspruchs 1 zu schaffen, durch die der Korrosionsschutz im Bereich des kritischen Übergangs von der Beschichtung des Blechbauteils zum Durchführungsstopfen sichergestellt werden kann, ein Verfahren zur Herstellung einer solchen Anordnung anzugeben und ein Maskierungselement dafür zu schaffen.

Diese Aufgabe wird bei einer Befestigungsanordnung nach dem Oberbegriff des Anspruchs 1 durch dessen kennzeichnende Merkmale, durch ein Verfahren mit den kennzeichnenden Merkmalen des Anspruchs 4 und durch einen Maskierungsstopfen nach dem Anspruch 5 gelöst.

Die Lösung besteht darin, daß bei der Befestigungsanordnung für einen Durchführungstopfen an einer Ausnehmung eines stärker beschichteten Blechbauteiles, bei der der die Ausnehmung umgebende Randbereich des Bleches unbeschichtet ist und der Durchführungsstopfen mit zwei Dichtlippen an diesem Randbereich anliegt und an die Beschichtung grenzt, beschichtungsseitig auf dem Randbereich eine Abdeckscheibe angeordnet ist, wobei diese zwischen dem unbeschichteten Blechrand einerseits und der jeweiligen Dichtlippe sowie der Randzone der Beschichtung andererseits gehaltert ist. Die Abdeckscheibe ist dabei wesentlich dünner als die Beschichtung des Bleches und kann beispielsweise aus Hart-PVC oder Hart-TEEE (Thermoplast Polyester Elastomer) bestehen, während die Beschichtung aus Weich-PVC hergestellt ist.

Die Verwendung von Hart-TEEE ist zu bevorzugen, wenn das Bauteil erhöhten Temperaturen ausgesetzt ist und ein Verformen oder Aufweichen der Abdeckscheibe nicht zugelassen werden kann, da Hart-TEEE eine höhere Wärmebeständigkeit als Hart-PVC aufweist.

Die Abdeckscheibe kann zur besseren und dichteren Anlage einer Dichtlippe des Durchführungsstopfens eine glatte Anlagefäche für diese aufweisen.

Durch die Abdeckscheibe wird der kritische Bereich des grundierten Bleches zwischen der Dichtlippe und der Beschichtung verschlossen und zuverlässig abgedeckt, wobei die Abdeckscheibe in ihrem äußeren Bereich durch die Beschichtung fest am Blech gehaltert ist und Feuchtigkeit oder gar Spritzwasser nicht unter die Beschichtung und damit auch nicht auf den unbeschichteten Blechrand dringen können.

Die Abdeckscheibe liegt zwar lose auf dem Blechrand auf, wird jedoch durch die Dichtlippen des angeordneten Durchführungsstopfens auf diesen gedrückt. Die auf der Abdeckscheibe elastisch aufliegende Dichtlippe verhindert, wie auch die aufgebrachte Beschichtung, das Eindringen von Feuchtigkeit, so daß der die Ausnehmung umgebende Blechrand korrosionsungefährdet ist. Überdies schützt die Abdeckscheibe das unbeschichtete Blech bzw. die Grundierung vor Sand- oder Steinschlag, wobei die Gefahr ihrer eigenen Verletzung äußerst gering ist. Die erfindungsgemäße Anordnung bietet somit auch einen sehr sicheren und dauerhaft zuverlässigen Schutz vor unerwünschten mechanischen Einflüssen.

Die Anordnung und Fixierung der Abdeckscheibe auf dem die Ausnehmung umgebenden Randbereich des Blechbauteils erfolgt in der Weise, daß diese lösbar an einem Maskierungsstopfen angeordnet ist, der vor der Beschichtung des Blechbauteils mit dieser gemeinsam an bzw. in der Ausnehmung in der vorbestimmten Lage positioniert und arretiert wird, wobei die Abdeckscheibe am Blechrand zur Anlage gelangt und der Maskierungsstopfen mit einem Einsatz in der Ausnehmung lösbar befestigt wird, und daß danach die Beschichtung des Blechbauteils erfolgt. Bei der Beschichtung wird auch der äußere Randbereich der Abdeckscheibe mit beschichtet, wodurch diese zwischen dem Blechrand und der Beschichtung in der vorbestimmten Position befestigt wird. Nach der Beschichtung wird der Maskierungsstopfen aus der Ausnehmung gedrückt und dabei auch von der Abdeckscheibe gelöst.

Anschließend kann der Durchführungsstopfen in der Ausnehmung angeordnet werden, wobei die eine Dichtlippe auf der Abdeckscheibe zur Anlage kommt und die andere auf der dieser abgewandten Seite des Bleches.

Der erfindungsgemäße Maskierungsstopfen weist einen Teil mit einem Einsatz zur Anordnung in der Ausnehmung auf und eine Abdeckscheibe zur Anlage an dem die Ausnehmung umgebenden Randbereich des Blechbauteils, wobei die Abdeckscheibe lösbar an dem genannten Teil gehaltert ist. Der Einsatz ist dabei so gestaltet, daß er elastisch verformt in der Ausnehmung geklemmt gehaltert werden kann und auf seiner der Ausnehmung abgewandten Seite einen Bereich aufweist, der die Abdeckscheibe in ihrem ausnehmungsnahen Bereich hintergreift und diese somit teilweise überlappt. Diese ist zwischen dem hintergreifenden Teil und dem Einsatz in einer Nut gehaltert, die mit einer am Einsatz angeordneten Rastlippe gebildet wird.

Zweckmäßigerweise weist der hintergreifende Teil des Maskierungsstopfens an seinem äußeren Rand einen im wesentlichen senkrecht zur Abdeckscheibe ausgebildeten umlaufenden Steg auf, der als Begrenzung für die folgende Beschichtung dient. Vorteilhafterweise sind die Abdeckscheibe und der Maskierungsstopfen aus dem gleichen elastischen Material gefertigt.

Nachdem der Maskierungsstopfen an der Ausnehmung in der vorbeschriebenen Weise angeordnet ist, werden das Blechbauteil und auch der äußere Randbereich der Abdeckscheibe beschichtet. Nach der Beschichtung wird der Maskierungsstopfen aus der Ausnehmung gedrückt, und die Abdeckscheibe verbleibt auf dem Blechrand.

Die Erfindung wird nachstehend an einem Ausbeispiel erläutert. In der zugehörigen Zeichnung zeigen, teilweise geschnitten:
- Fig. 1:: die erfindungsgemäße Befestigungsanordnung eines Durchführungsstopfens an einer Ausnehmung eines einseitig beschichteten Blechbauteils,
- Fig. 2:: eine Abdeckscheibe in der Draufsicht,
- Fig. 3:: einen erfindungsgemäßen Maskierungsstopfen mit angeordneter Abdeckscheibe in Seitenansicht,
- Fig. 4:: den Maskierungsstopfen ohne Abdeckscheibe,
- Fig. 5:: eine Draufsicht auf diesen und
- Fig. 6:: die Einzelheit E im Schnitt.

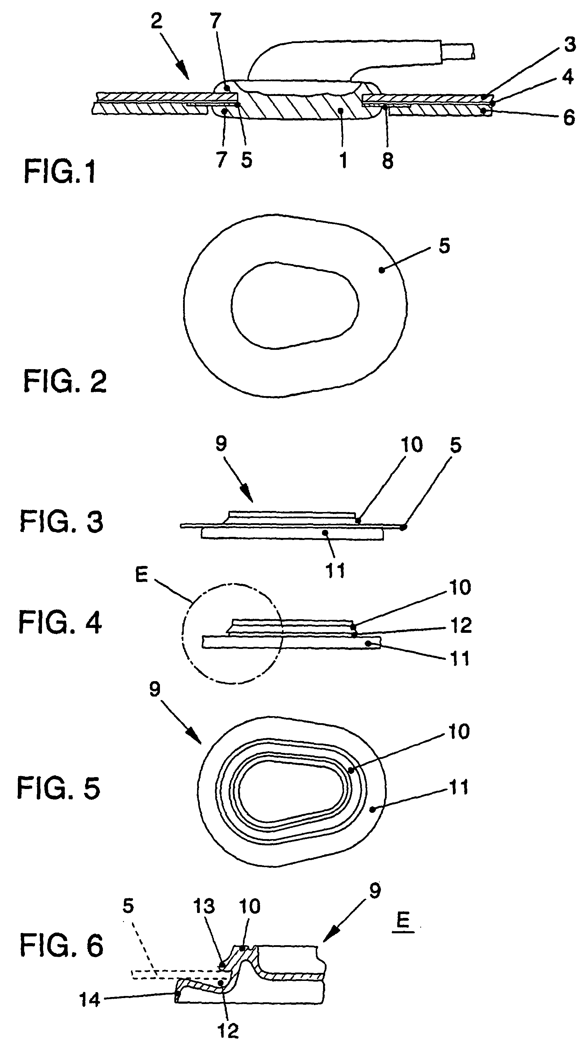

In Fig. 1 ist die Anordnung eines Leitungs-Durchführungsstopfens 1 in der Ausnehmung eines Radkastens 2 (nicht ausgeführt) dargestellt. Dieser ist ein Blechbauteil, das aus einem Blech 3 gefertigt ist, das wenigstens auf der Innenseite des Radkastens 2 mit einer Grundierungsschicht versehen ist. Auf dem die Ausnehmung umgebenden Randbereich des Bleches 3 ist auf der Innenseite des Radkastens 2 eine in der Draufsicht in Fig. 2 gezeigte Abdeckscheibe 5 angeordnet, deren Innenkontur in Form und Größe der Kontur der Ausnehmung entspricht, etwa o,5 mm dick ist und aus Hart-TEEE besteht.
Auf der Grundierungsschicht 4 ist zum Zwecke des Korrosionsschutzes, zur Schallisolierung und Vibrationsdämpfung eine etwa 3 mm dicke Weich-PVC-Schicht 6 angeordnet, die auch den äußeren Randbereich der Abdeckscheibe (5) - etwa 40 % von deren Gesamtbreite - überdeckt, und am Blech 3 dichtend fixiert. An dem beschichtungsfreien, die Ausnehmung umgebenden Randbereich des Bleches 3 ist der Leitungs-Durchführungsstopfen 1 angeordnet und mit zwei Dichtlippen 7 am Blechrand fixiert, wobei die Abdeckscheibe eine glatte Anlagefläche 8 für die dort anliegende Dichtlippe 7 aufweist.

Die Fig. 3 und 4 zeigen einen erfindungsgemäßen Maskierungsstopfen 9 in einer Seitenansicht, Fig. 3 mit und Fig. 4 ohne Abdeckscheibe 5. Dieser weist einen in seiner Form an die Form der Ausnehmung angepaßten Einsatz 10, eine Abdeckscheibe 5 und einem diese hintergreifenden Teil 11 auf, durch den die in einer Halterungsnut 12 angeordnete Abdeckscheibe 5 teilweise überlappt ist (Fig. 3). Zur Bildung der Halterungsnut 12 ist am Einsatz 10 eine umlaufende Rastlippe 13 angeformt, die die Abdeckscheibe 5 gegen den Teil 11 drückt. Die Abdeckscheibe 5 ist in dieser Halterungsnut 12 lösbar eingeklemmt, so daß sie vom Maskierungsstopfen 9 entfernt werden kann. Die Ausbildung der Halterungsnut 12 ist in Fig. 6 im Schnitt (Einzelheit E) dargestellt. Dort ist auch gezeigt, daß am äußeren Rand des Teils 11 ein im wesentlichen senkrecht zur Abdeckscheibe 5 und damit auch zum Blech 3 angeordneter umlaufender Steg 14 ausgebildet ist.

Zur Herstellung der Befestigungsanordnung nach Fig. 1 wird der mit der Abdeckscheibe 5 versehene Maskierungsstopfen 9 (Fig. 3) in die zur Anordnung des Leitungs-Durchführungsstopfens 1 vorgesehene Ausnehmung des noch unbeschichteten Radkastens 2 gedrückt und mit dem Einsatz 10 festgeklemmt, derart, daß die Abdeckscheibe 5 an der Grundierung anliegt. Anschließend wird das Blech 3 des Radkastens 2 mit Weich-PVC beschichtet, wobei der Steg 14 des Maskierungsstopfens 9 die ausnehmungsseitige Begrenzung für die Beschichtung darstellt. Bei der Beschichtung wird der nicht vom hintergreifenden Teil 11 überlappte Bereich der Abdeckscheibe 5 mit beschichtet. Dadurch wird diese fest am Blech angeordnet. Nach der Beschichtung werden der Maskierungsstopfen von der Ausnehmung und der Abdeckscheibe 5 entfernt und an dessen Stelle der Durchführungsbolzen 1 angeordnet.

## Patentansprüche

1. Befestigungsanordnung für einen Durchführungsstopfen an einer Ausnehmung eines beschichteten Blechbauteiles an einem Fahrzeug, wobei der die Ausnehmung umgebende Randbereich des Bleches unbeschichtet ist und der Durchführungsstopfen mit zwei Dichtlippen an diesem Randbereich anliegt und an die Beschichtung grenzt, **dadurch gekennzeichnet, daß** beschichtungsseitig zwischen dem Randbereich des Bleches (3) einerseits und der jeweiligen Dichtlippe (7) sowie der Randzone der Beschichtung (6) andererseits eine Abdeckscheibe (5) angeordnet ist, die wesentlich dünner als die Beschichtung (6) ist.

2. Anordnung nach Anspruch 1, **dadurch gekennzeichnet, daß** die Abdeckscheibe (5) aus Hart-TEEE oder aus Hart-PVC und die Beschichtung (6) aus Weich-PVC besteht.

3. Anordnung nach Anspruch 1 oder 2, **dadurch gekennzeichnet, daß** die Abdeckscheibe (5) dichtlippenseitig eine glatte Anlagefläche (8) für die Dichtlippe (7) des Durchführungsstopfens (1) aufweist.

4. Verfahren zur Herstellung der Befestigungsanordnung nach einem der Ansprüche 1 bis 3, **dadurch gekennzeichnet, daß** die Abdeckscheibe (5) lösbar an einem Maskierungsstopfen (9) angeordnet ist, daß dieser vor dem Aufbringen der Beschichtung (6) in der Ausnehmung lösbar angeordnet und dabei mit der Abdeckscheibe zur Anlage am Blech (3) gebracht wird, daß danach das Blech (3) und der äußere Randbereich der Abdeckscheibe (5) beschichtet werden und anschließend der Maskierungsstopfen (9) aus der Ausnehmung und von der Abdeckscheibe (5) entfernt wird, und daß der Durchführungsstopfen (1) in der Ausnehmung dichtend angeordnet wird.

5. Maskierungsstopfen mit einem in einer Ausnehmung eines zu beschichtenden Blechbauteiles arretierbaren Einsatz und einem Abdeckflansch für den die Ausnehmung umgebenden Randbereich des Bleches zur Sicherstellung einer beschichtungsfreien Zone, **dadurch gekennzeichnet, daß** der Abdeckflansch eine Abdeckscheibe (5) ist, die mit dem den Einsatz (10) aufweisenden Teil des Maskierungsstopfens (9) lösbar verbunden ist.

6. Maskierungsstopfen nach Anspruch 5, **dadurch gekennzeichnet, daß** die Abdeckscheibe (5) auf der dem Randbereich des Bleches (3) abgewandten Seite eine glatte Anlagefläche (8) aufweist.

7. Maskierungsstopfen nach Anspruch 6, **dadurch gekennzeichnet, daß** der den Einsatz (10) aufweisende Teil die Abdeckscheibe (5) hintergreift und diese teilweise überlappt.

8. Maskierungsstopfen nach Anspruch 7, **dadurch gekennzeichnet, daß** am Rand des die Anlagefläche (8) hintergreifenden Teils (11) des Maskierungsstopfens (9) ein im wesentlichen senkrecht zur Abdeckscheibe (5) ausgebildeter umlaufender Steg (14) ausgebildet ist.

9. Maskierungsstopfen nach Anspruch 6, **dadurch gekennzeichnet, daß** die Abdeckscheibe (5) zwischen dem hintergreifenden Teil (11) und dem Einsatz (10) klemmend gehaltert ist.

10. Maskierungsstopfen nach Anspruch 9, **dadurch gekennzeichnet, daß** der Einsatz (10) eine Rastlippe (13) aufweist, mit der die Abdeckscheibe (5) gegen den hintergreifenden Teil (11) gedrückt und gegen diesen elastisch gehaltert ist.

11. Maskierungsstopfen nach einem der Ansprüche 5 bis 10, **dadurch gekennzeichnet, daß** die Abdeckscheibe (5) und der Maskierungsstopfen (9) aus einem elastischen Material bestehen.

## Claims

1. Fastening arrangement for a lead-through plug at a recess of a coated sheet-metal component on a vehicle, the metal-sheet edge region which surrounds the recess being uncoated, and the lead-through plug bearing with two sealing lips on this edge region and being adjacent to the coating, **characterized in that** a cover disc (5), which is substantially thinner than the coating (6), is arranged, on the coating side, between the edge region of the metal sheet (3), on the one hand, and the respective sealing lip (7) and the edge zone of the coating (6), on the other hand.

2. Arrangement according to Claim 1, **characterized in that** the cover disc (5) consists of hard TEEE or of hard PVC and the coating (6) of soft PVC.

3. Arrangement according to Claim 1 or 2, **characterized in that** the cover disc (5) has, on the sealing-lip side, a smooth bearing surface (8) for the sealing lip (7) of the lead-through plug (1).

4. Method for producing the fastening arrangement according to one of Claims 1 to 3, **characterized in that** the cover disc (5) is arranged releasably on a masking plug (9), **in that** the latter is arranged releasably in the recess before the application of the coating (6) and is at the same time brought to bear, together with the cover disc, on the metal sheet (3), **in that**, thereafter, the metal sheet (3) and the outer edge region of the cover disc (5) are coated and, subsequently, the masking plug (9) is removed out of the recess and from the cover disc (5), and **in that** the lead-through plug (1) is arranged in a sealing manner in the recess.

5. Masking plug with an insert detainable in a recess of a sheet-metal component to be coated and with a cover flange for the metal-sheet edge region surrounding the recess, in order to ensure a coating-free zone, **characterized in that** the cover flange is a cover disc (5) which is connected releasably to that part of the masking plug (9) which has the insert (10).

6. Masking plug according to Claim 5, **characterized in that** the cover disc (5) has a smooth bearing surface (8) on the side facing away from the edge region of the metal sheet (3).

7. Masking plug according to Claim 6, **characterized in that** the part having the insert (10) engages behind the cover disc (5) and partially overlaps the latter.

8. Masking plug according to Claim 7, **characterized in that** a periphery web (14) formed essentially perpendicularly to the cover disc (5) is formed at the edge of that part (11) of the masking plug (9) which engages behind the bearing surface (8).

9. Masking plug according to Claim 6, **characterized in that** the cover disc (5) is held in a clamping manner between the part (11) engaging behind and the insert (10).

10. Masking plug according to Claim 9, **characterized in that** the insert (10) has a locking lip (13), by means of which the cover disc (5) is pressed against the part (11) engaging behind and is held elastically against the latter.

11. Masking plug according to one of Claims 5 to 10, **characterized in that** the cover disc (5) and the masking plug (9) consist of an elastic material.

## Revendications

1. Agencement de montage pour un bouchon à passage de câble sur une découpe dans une pièce de tôle avec un revêtement protecteur dans un véhicule, dans lequel la zone du bord de la tôle entourant la découpe n'est pas revêtue et le bouchon de passage de câble s'applique sur cette zone du bord avec deux lèvres d'étanchéité et est jointif au revêtement, **caractérisé en ce que** du côté du revêtement, entre la zone du bord de la tôle (3) d'une part et la lèvre d'étanchéité respective (7) ainsi que la zone du bord du revêtement (6) d'autre part est disposée une rondelle de recouvrement (5), qui est sensiblement plus mince que le revêtement (6).

2. Agencement suivant la revendication 1, **caractérisé en ce que** la rondelle de recouvrement (5) se compose de TEEE rigide ou de PVC rigide et le revêtement (6) de PVC plastifié.

3. Agencement suivant la revendication 1 ou 2, **caractérisé en ce que** la rondelle de recouvrement (5) présente, du côté de la lèvre d'étanchéité, une face d'appui lisse (8) pour la lèvre d'étanchéité (7) du bouchon à passage de câble (1).

4. Procédé pour la fabrication de l'agencement de montage suivant l'une quelconque des revendications 1 à 3, **caractérisé en ce que** la rondelle de recouvrement (5) est disposée de façon séparable sur un bouchon de masquage (9), **en ce que** ce dernier est disposé de façon séparable dans la découpe avant l'application du revêtement (6) et est ainsi appliqué sur la tôle (3) par la rondelle de recouvrement, **en ce que** la tôle (3) et la zone du bord extérieur de la rondelle de recouvrement (5) sont ensuite revêtues puis que le bouchon de masquage (9) est retiré de la découpe et de la rondelle de recouvrement (5), et **en ce que** le bouchon à passage de câble (1) est disposé de façon étanche dans la découpe.

5. Bouchon de masquage avec un insert à caler dans une découpe d'une pièce de tôle à revêtir et avec une bride de recouvrement pour la zone du bord de la tôle entourant la découpe en vue de garantir une zone libre de revêtement, **caractérisé en ce que** la bride de recouvrement est une rondelle de recouvrement (5), qui est assemblée de façon séparable à la partie du bouchon de masquage (9) qui présente l'insert (10).

6. Bouchon de masquage suivant la revendication 5, **caractérisé en ce que** la rondelle de recouvrement (5) présente une face d'appui lisse (8) sur la face située à l'opposé de la zone du bord de la tôle (3).

7. Bouchon de masquage suivant la revendication 6, **caractérisé en ce que** la partie qui présente l'insert (10) accroche la rondelle de recouvrement (5) par l'arrière et recouvre en partie celle-ci.

8. Bouchon de masquage suivant la revendication 7, **caractérisé en ce qu'**une ailette périphérique (14) construite de façon sensiblement perpendiculaire à la rondelle de recouvrement (5) est façonnée dans le bord de la partie (11) du bouchon de masquage (9) qui accroche la face d'appui (8) par l'arrière.

9. Bouchon de masquage suivant la revendication 6, **caractérisé en ce que** la rondelle de recouvrement (5) est maintenue en position serrée entre la partie (11) accrochée par l'arrière et l'insert (10).

10. Bouchon de masquage suivant la revendication 9, **caractérisé en ce que** l'insert (10) présente une lèvre d'arrêt (13), avec laquelle la rondelle de recouvrement (5) est pressée contre la partie (11) accrochée par l'arrière et est maintenue de façon élastique contre celle-ci.

11. Bouchon de masquage suivant l'une quelconque des revendications 5 à 10, **caractérisé en ce que** la rondelle de recouvrement (5) et le bouchon de masquage (9) sont constitués d'une matière élastique.
